# EUROPEAN PATENT APPLICATION

(11) **EP 1 345 224 A1**
(43) Date of publication of application: **17.09.2003**
(21) Application number: 03251449.9
(22) Date of filing: 11.03.2003
(51) Int. Cl.: G11B 20/24

(54) **Video recording and reproducing apparatus**

(30) Priority: 11.03.2002 JP 2002065994
(71) Applicant: ORION ELECTRIC CO., Ltd., Takefu-City, Fukui 915 (JP)
(72) Inventor: Takinami, Eiichirou, c/o Orion Electric Co., Ltd, Takefu-City, Fukui (JP)
(74) Representative: Nettleton, John Victor

(57) **Abstract**

A video recording and reproducing apparatus reproducing smooth video pictures having no distortion and uncomfortable noises, comprising a random-access recording medium (1), a recording means (3) to record input video signals on said recording medium, a reproducing means (4) to reproduce recorded video signals, and a muting means (10) to mute video signals at the time of switching.

## Description

### BACKGROUND OF THE INVENTION

### Field of the Invention:

The present invention relates to a video recording and reproducing apparatus which is capable of recording TV broadcasting pictures while reproducing the recorded video pictures by using a random-access recording medium.

### Prior Art:

In a recent video recording and reproducing apparatus for recording and reproducing TV broadcasting pictures, there have been used a random-access mass-storage means in a form of disc recording medium such as hard disc, DVD-R, DVD-RW and so forth.

By recording video pictures on such a disk recording medium, any scene of a recorded program can be reproduced while recording the program by means of time-shift reproducing operation. It is also possible that another recorded program can be reproduced while recording a real-time program.

When a TV program being viewed is converted to another TV program by switching to another channel, there often occurs such a problem that video signals to be input are synchronized unstably . Accordingly, in case video signals input at the time of channel switching are output without modification, distorted video images and noises caused by audio switching are induced. To solve the problems in a recent video recording and reproducing apparatus, in case inputted video signals are output in real time, the input video signals are muted prior to being output to a TV monitor, so as not to generate distorted video images and noises.

However, when input video signals are recorded on a recording medium, as in the case of time-shift reproducing operation, the video signals are directly output to a recording medium and the video signals at the time of channel switching are recorded. Accordingly, when such video signals are reproduced, distorted video images and noises are induced, which gives an uncomfortable feeling to a user and also leads to reduction of visual quality.

### SUMMARY OF THE INVENTION

It is, therefore, an object of the present invention to provide a video recording and reproducing apparatus which is able to record and reproduce video signals without giving an uncomfortable feeling to a user even when a switching of video signals is performed by a channel switching and the like at the time of recording of video signals on a recording medium.

In order to accomplish the above object, the present invention provides a video recording and reproducing apparatus comprising a random-access recording medium, a recording means to record input video signals on the recording medium, a reproducing means to reproduce the recorded video signals and a muting means to mute video signals at the time of switching when input video signals are switched to another video signals.

Here, the video signals at the time of switching refers to video signals to be recorded on a recording medium or video signals which are read out and reproduced from a recording medium. Further, the video signals may include ones with or without audio signals. By muting such video signals at the time when input video signals are switched, video signals reproduced from reproducing means are not affected by a switching operation. Accordingly, no distorted video images and noises are induced, so that high quality video images can be provided without giving an uncomfortable feeling to a user.

Muting is applied to video signals prior to be recorded on a recording medium at the time of switching of video signals to be input. Alternatively, such muting is applied to video signals to be reproduced after being recorded on a recording medium at the time of switching of video signals to be input. In case muting is performed prior to recording, muting operation can be performed in response to switching of video signals. Video signals to be reproduced can be output without modification. Thus operation control becomes easy.

The muting means is arranged to mute video signals at the same time when the video signals are switched. Thus, unnecessary video signals are not recorded, and as a result smooth video pictures can be reproduced.

A so-called time-shift reproducing operation is one of reproduction modes which reproduces video signals after being recorded. The present invention provides a video recording and reproducing apparatus to perform the time-shift reproducing operation, which comprises a recording and reproducing means for performing a time-shift reproducing operation which reproduces input video signals after being recorded on a recording medium, a switching means for selectively outputting input video signals either in real time or to be recorded on the recording medium so as to perform the time-shift reproducing operation, and a muting means to mute video signals at the time of switching of input video signals in response to an external command. The muting means is arranged to operate as follows. In case video signals are output in real time, muting is applied to video signals output from the switching means. In case video signals are output to the recording medium, muting is applied to video signals before being recorded on the recording medium. The recording and reproducing apparatus reproduces the muted video signals after being recorded.

### BRIEF DESCRIPTION OF THE DRAWINGS

Fig. 1 is a block diagram showing one embodiment of a recording and reproducing apparatus according to the present invention;
Fig. 2 is a flow chart showing a muting process at the time of channel switching; and
Fig. 3 is a timing chart of muting process.

### DETAILED DESCRIPTION OF THE PREFERRED MBODIMENTS

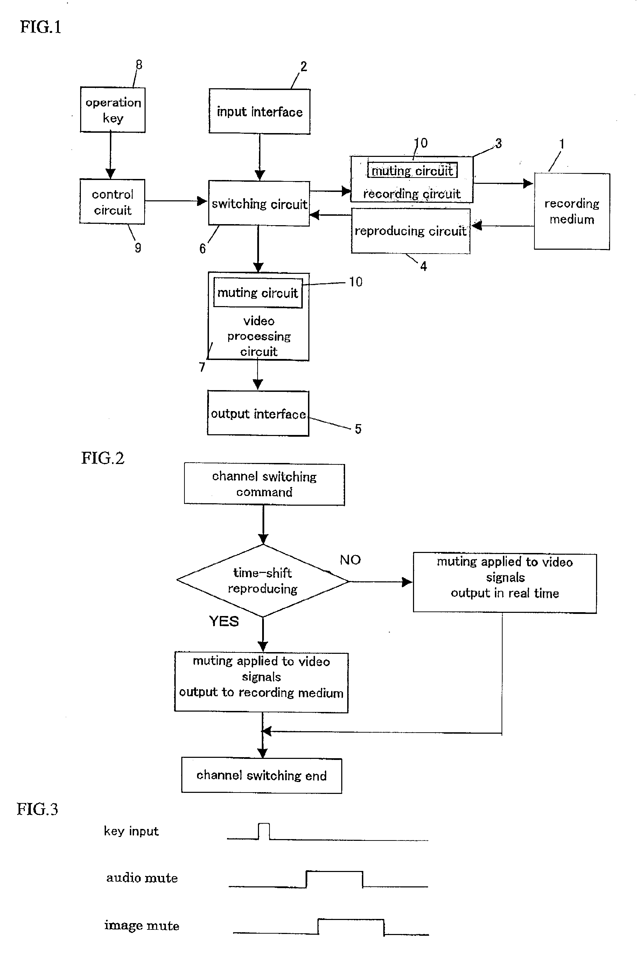

One embodiment of a recording and reproducing apparatus according to the present invention is shown in Fig. 1. The apparatus is provided with a hard disk as a random-access recording medium 1; a recording circuit (a recording means) 3 for recording video signals input from a tuner or a video camera through an input interface 2 on a recording medium 1; a reproducing circuit (a reproducing means) 4 for reproducing recorded video signals; a switching circuit (a switching means) 6 for selectively outputting input video signals either through an output interface 5 in real time without recording on the recording medium 1 or to the recording medium 1 so as to record the video signals; a video processing circuit (a video processing means) 7 for processing the video signals so as to be output to a TV monitor and a speaker; a control circuit (a control means) 9 for operating the switching circuit 6 in response to an input from an operation key 8 of a remote controller; and a muting circuit (a muting means) 10 for muting video signals at the time of switching operation. The video signals include audio signals in this embodiment.

The recording circuit 3 reproduces video data for recording. In case video signals are of analog type, the analog signals are converted to digital signals and then compressed. Video signals of digital type are compressed. The reproducing circuit 4 decompresses the video data read out from the recording medium 1 and converts the digital signals to analog signals to output video signals to the switching circuit 6. Further, the reproducing circuit 4 performs readout and any other processing in response to the commands of fast-forwarding or rewinding which are input by the operation key 8. By using the recording circuit 3 and the reproducing circuit 4 at the same time, it is possible to record one program while reproducing another program already recorded. Further, it is also possible to perform a time-shift reproduction to record a program while reproducing any portion of the program already recorded.

The switching circuit 6 is arranged to selectively switch supply sources of output video signals in response to commands from the operation key 8. Namely, the switching circuit 6 selectively switches the sources comprising a line directly connecting the input interface 2 and a video processing circuit 7, a line from the input interface 2, via the recording circuit 3, through the recording medium 1, and a line from the recording medium 1, via the reproducing circuit 4, through the video processing circuit 7. The video processing circuit 7 is arranged to synthesize video signals and information data in order to output and display the information data on the video pictures.

The muting circuit 10 is arranged to display no video pictures or display a still picture and to cut out the voice output at the time of switching of video signals due to such switching of input sources as channel switching, switching from a tuner to an external device and the like. The muting operation is performed by employing a well known manner such as lowering levels of video signals, shutting off video signals and the like for a certain period of time. The muting circuit 10 is included in the recording circuit 3 to mute video signals recorded on the recording medium 1. Further, the muting circuit 10 is included also in the video processing circuit 7 to mute video signals output from the input interface 2 directly to the output interface 5. The muting circuit 10 can be included in the switching circuit 6 at a respective output step to the recording medium 3 or to the video processing circuit 7. The muting circuit 10 disposed separately can be united by a single muting circuit.

The controlling circuit 9 controls the switching circuit 6 to select a line in response to a selected menu such as reproducing, recording, or time-shift reproducing and controls the operations of the recording medium 1, the recording circuit 3, the reproducing circuit 4, and the video processing circuit 7. The controlling circuit 9 outputs actuating signals to the respective muting circuits 10 in response to a command for switching video signals, such as channel switching, input from the operation key. Depending on an operation mode, any muting circuit 10 starts to operate so as to mute video signals.

Now, operations for switching video signals in a recording and reproducing apparatus will be explained. When both recording and reproducing is not being performed, video signals input from the input interface 2 are output, via the switching circuit 6 through the video processing circuit 7, from the output interface 5 in real time. In case of recording, input video signals are output via the switching circuit 6 to the recording circuit 3 and subsequently recorded on the recording medium 1. In case of reproducing, video signals read out from the recording medium 1 are output from the output interface 5 via the reproducing circuit 4, the switching circuit 6, and the video processing circuit 7. In case of time-shift reproducing, the above-described recording and reproducing operations are performed at the same time. Video signals are output in real time and also recorded, and reproducing starts when a user selects any portion of already recorded video signals.

Fig. 2 and Fig. 3 shall be also referred. When channel switching command is output by the operation key 8, the command is input to the controlling circuit 9. The controlling circuit 9 detects the present operation conditions to decide whether time-shift reproducing is being performed or not. When the time-shift reproducing is not performed, muting operation is performed to video signals output from the switching circuit 6 to the video processing circuit 7. As shown in Fig. 3, as soon as a command from the operation key 8 is input to the controlling circuit 9, muting is applied to audio signals and after some delay to video signals. Noises take place at the time of switching of video signals and so muting is applied to audio signals prior to video signals. Distortion of pictures takes place until muting is applied to video signals, but it can be ignored, because such distortion occurs in split seconds and cannot be recognized by a human's vision. The period of muting is set to be longer than the period until the switched video signals is input normally. When the video signals muted for a certain period are output from the output interface 5, the switching operation is completed.

In case of time-shift reproducing, muting is applied to video signals output from the switching circuit 6 to the recording circuit 3. As shown in Fig. 3, as soon as a command from the operation key 8 is input to the controlling circuit 9, muting is applied to audio signals and after some delay to video signals. The muted video signals are recorded, via the recording circuit 3, on the recording medium 1. Then, the switching operation is completed and subsequently video signals after the switching operation are recorded.

After that, when a user appoints any portion of video signals already recorded, video signals recorded are read out by the reproducing circuit 4 and output, via the switching circuit 6 through the video processing circuit 7, from the output interface 5. The output video signals pass through the video processing circuit 7, but muting is not applied thereto.

Accordingly, even when video signals are switched for example by channel switching under the condition of time-shift reproducing, video signals are recorded after muting in exact timing with a channel switching. Thus, when the video signals are reproduced, smooth video pictures can be reproduced having no distortion and uncomfortable noises. These performances can be attained by employing a simple software without using a complicated external circuit, and manufacturing costs do not increase.

It should be noted that the foregoing description is only illustrative of the invention. Various alternatives and modifications can be devised by those skilled in the art without departing from the invention. For example, recording media are not limited only to hard disks. Rewritable DVDs, CDs, and semiconductor memories are also available.

Further, in case video signals are muted at the time of switching, such muting may be applied not only at the time of time-shift reproducing, but also at the time of switching video signals while being recorded. For example, it is such a case that video signals now being input are output in real time while recording and reproducing is made later. In addition, as for the timing for muting video signals, it may be applicable to mute video signals already recorded. In other words, even if switching of video signals is made, recording of the video signals on a recording medium is continued, and at the time of reproducing, muting is applied to a portion corresponding to video signals at the time of switching. In this case, when video signals are recorded, data showing the timing at which video signals are switched is also recorded at the same time. By detecting the timing data, muting is applied to reproducing video signals.

As apparent from the explanations as above, according to the present invention, muting is applied to video signals at the time of switching in response to the switching of video signals caused by for example channel switching. Thus, video signals to be reproduced are muted. As a result, no distorted video pictures and noises appear on the reproduced video pictures and then smooth video pictures, which give no discomfort to a user, can be provided.

## Claims

1. A video recording and reproducing apparatus comprising:
a random-access recording medium;
a recording means to record input video signals on said recording medium;
a reproducing means to reproduce recorded video signals; and
a muting means to mute video signals at the time of switching when input video signals are switched.

2. A video recording and reproducing apparatus comprising:
a random-access recording medium;
a recording means to record input video signals on the recording medium; and
a muting means to mute video signals prior to be recorded on said recording medium when input video signals are switched.

3. A video recording and reproducing apparatus comprising:
a random-access recording medium;
a video reproducing means to perform time-shift reproducing operation which reproduces input video images after being recorded on said recording medium; and
a muting means to mute time-shift reproducing video signals prior to be recorded on said recording medium when input video signals are switched.

4. A video recording and reproducing apparatus comprising:
a random-access recording medium;
a video reproducing means to perform time-shift reproducing operation which reproduces input video images after being recorded on said recording medium;
a switching means for selectively outputting said input video signals either in real time or to be recorded on the recording medium so as to perform said time-shift reproducing operation;
a muting means to mute video signals at the time of switching of input video signals in response to an external command;
said muting means muting video signals output from said switching means when video signals are output in real time and muting video signals prior to be recorded on said recording medium when video signals are output to said recording medium ; and
said video reproducing means reproducing said muted signals after being recorded.

5. A video recording and reproducing apparatus as claimed in Claim 2, wherein a muting means mutes video signals at the same time when said video signals are switched and outputs to a recording medium.

6. A video recording and reproducing apparatus as claimed in Claim 3, wherein a muting means mutes video signals at the same time when said video signals are switched and outputs to a recording medium.

7. A video recording and reproducing apparatus as claimed in Claim 4, wherein a muting means mutes video signals at the same time when said video signals are switched and outputs to a recording medium at the same time when said video signals are switched.
